# EUROPEAN PATENT APPLICATION

(11) **EP 4 001 711 A1**
(43) Date of publication of application: **25.05.2022**
(21) Application number: 20841399.7
(22) Date of filing: 11.06.2020
(51) Int. Cl.: F16K 3/10, F16K 3/314, F16K 27/04

(54) **CONTROL VALVE**

(30) Priority: 18.07.2019 CN 201910648295
(71) Applicant: Zhejiang Sanhua Automotive Components Co., Ltd., Hangzhou, Zhejiang 310018 (CN)
(72) Inventor: WANG, Lixin, Hangzhou Economic&technological Development Area Hangzhou, Zhejiang 310018 (CN); LV, Huipeng, Hangzhou Economic&technological Development Area Hangzhou, Zhejiang 310018 (CN); LU, Yongpin, Hangzhou Economic&technological Development Area Hangzhou, Zhejiang 310018 (CN); WANG, Zhengwei, Hangzhou Economic&technological Development Area Hangzhou, Zhejiang 310018 (CN)
(74) Representative: Maikowski & Ninnemann Patentanwälte Partnerschaft mbB
(86) International application number: PCT/CN2020/095487
(87) International publication number: WO 2021/008279

(57) **Abstract**

A control valve, comprising a valve body (1) and a valve core assembly (5), at least one part of the valve core assembly (5) being accommodated in a valve cavity (14); the valve body (1) further comprising a first open part (16) and a second open part (17), the second open part (17) being located at a valve cavity bottom wall part (141); the valve core assembly (5) comprising a first valve plate (51) and a second valve plate (52), the first valve plate (51) being nearer to the valve core bottom wall part (141) relative to the second valve plate (52), and a gasket (4) being disposed between the first valve plate (51) and the valve core bottom wall part (141); the first valve plate (51) having a first through hole (514) and a second through hole (512); the gasket having a third through hole (41), the third through hole (41) being disposed opposite to the second open part (17), and the first through hole (514) being disposed opposite the third through hole (41); a first limiting part (3) penetrating the second through hole (512), one end of the first limiting part (3) abutting the first valve plate (51), and another end of the first limiting part (3) being fixed to or an integral structure of the valve body (1).

## Description

The present application claims priority of Chinese Patent Application No. 201910648295.6, titled "CONTROL VALVE", filed with the China National Intellectual Property Administration on July 18, 2019, which is incorporated herein by reference in its entirety.

### FIELD

The present application relates to the technical field of fluid control, and in particular to a control valve.

### BACKGROUND

A control valve can be applied in a fluid medium pipeline system, for example, can be configured to switch flow paths. As an example with application of the control valve in an automotive field, the control valve may be applied in an air conditioning system, an engine cooling system, or a battery cooling system.

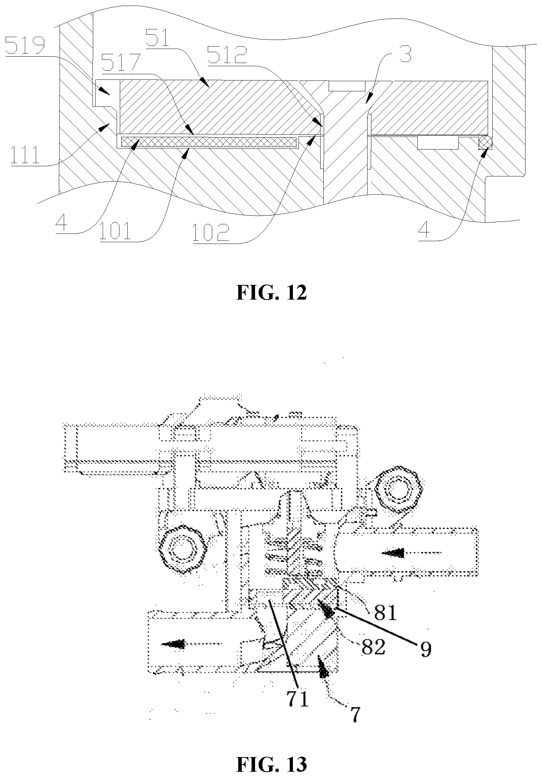

In a control valve shown in FIG. 13, the control valve includes an active valve core 81 and a static valve plate 82 located in a valve body 7, and a valve port 71 of the static valve plate 82 is cut off or opened by the rotation of the active valve core 81. A sealing gasket 9 is further provided between the static valve plate 82 and the valve body 7, and the static valve plate 82 abuts against the sealing gasket 9 through a pressure generated by the active valve core 81 acting on the static valve plate 82.

### SUMMARY

A control valve is provided according to technical solution of the present application. The control valve comprises a valve body and a valve core assembly, where the valve body comprises a valve cavity, and at least a part of the valve core assembly is accommodated in the valve cavity; the valve body further comprises a first opening portion and a second opening portion; the valve body comprises a valve cavity bottom wall portion, and the second opening portion is located at the valve cavity bottom wall portion; where,

the valve core assembly comprises a first valve plate and a second valve plate; the first valve plate is closer to the valve cavity bottom wall portion relative to the second valve plate, and a sealing gasket is provided between the first valve plate and the valve cavity bottom wall portion; the first valve plate is provided with a first through hole and a second through hole, the sealing gasket is provided with a third through hole corresponding to the second opening portion, the first through hole corresponds to the third through hole;

the control valve further comprises a first limiting part penetrating through the second through hole, one end of the first limiting part abuts against the first valve plate, and the other end of the first limiting part is fixed to the valve body or is in an integral structure with the valve body.

In the control valve provided according to this solution, the first limiting part is configured to relatively fix the first valve plate to the valve body, which reduces the possibility of loosening of the sealing gasket between the first valve plate and the valve cavity bottom wall portion, and improves the sealing reliability of the second opening portion.

### BRIEF DESCRIPTION OF THE DRAWINGS

FIG. 1 shows a schematic front view of an embodiment of the present application;
FIG. 2 shows a schematic cross-sectional view of a control valve shown in FIG. 1;
FIG. 3 shows a perspective schematic view of a part of the control valve shown in FIG. 1;
FIG. 4 shows an exploded schematic view of FIG. 3;
FIG. 5 shows a schematic top view of FIG. 3;
FIG. 6 shows a schematic cross-sectional view of a part of the control valve shown in FIG. 5 along a line A-A;
FIG. 7 shows a perspective schematic view of a second limiting part in the control valve shown in FIG. 4;
FIG. 8 shows a schematic cross-sectional view of the second limiting part shown in FIG. 7 along a line B-B;
FIG. 9 shows a partial enlarged view of FIG. 6;
FIG. 10 shows an exploded schematic view of a part of another embodiment of the present application;
FIG. 11 shows a perspective schematic view of a part of the control valve shown in FIG. 10;
FIG. 12 shows a schematic cross-sectional view of a part of the control valve shown in FIG. 10; and
FIG. 13 shows a schematic cross-sectional view of a control valve.

### DETAILED DESCRIPTION OF THE EMBODIMENTS

The embodiments will be described in detail below in conjunction with the drawings.

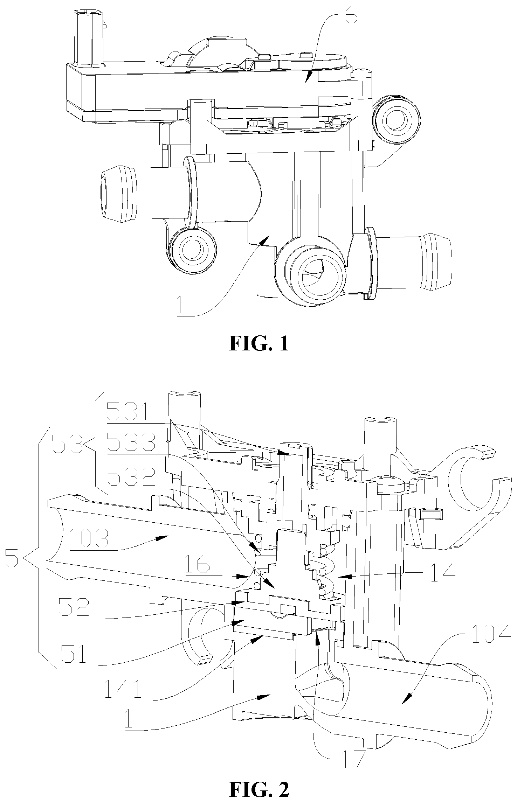

As shown in FIG. 1 and FIG. 2, the control valve includes a valve body 1 and a valve core assembly 5. The valve body 1 is provided with a valve cavity 14, at least a part of the valve core assembly 5 is accommodated in the valve cavity 14, and another part of the valve core assembly 5 may extend out of the valve cavity 14. For example, a part of a first transmission portion 531 extends out of the valve cavity 14. The control valve further includes a driving portion 6, and a transmission part 53 is in transmission connection with the driving part 6. The driving part 6 can be configured to drive a second valve plate 52 to rotate to a certain angle through the transmission part 53. The transmission part 53 includes an elastic element 533, the first transmission portion 531 and a connecting portion 532. The connecting portion 532 and the first transmission portion 531 are relatively movable in the axial direction. One end of the elastic element 533 abuts against the first transmission portion 531, and the other end of the elastic element 533 abuts against the connecting portion 532. The elastic element 533 is in a compressed state, and may at least apply pressure to the connecting portion 532 toward the valve cavity bottom wall portion 141, so that the second valve plate 52 can also be applied with pressure toward the valve cavity bottom wall portion 141. As a result, the second valve plate 52 closely fits with the first valve plate 51 in a normal working state, and the pressure may be referred to as a pre-tightening force. The "axial direction" refers to a direction along a rotation axis of the second valve plate 52.

As shown in FIG. 2 to FIG. 4, the valve body 1 further includes a first opening portion 16, a second opening portion 17, and a third opening portion 19. The valve body 1 is further provided with a first interface channel 103, a second interface channel 104, and a third interface channel (not shown in the figures). The first opening portion 16 is located at a junction of the first interface channel 103 and the valve cavity 14, the second opening portion 17 is located at a junction of the second interface channel 104 and the valve cavity 14, and the third opening portion 19 is located at a junction of the third interface channel and the valve cavity 14. The valve core assembly 5 includes a first valve plate 51 and a second valve plate 52. The first valve plate 51 is closer to the valve cavity bottom wall portion 141 relative to the second valve plate 52, and the second opening portion 17 and the third opening portion 19 are also provided in the valve cavity bottom wall portion 141 of the valve cavity 14.

As shown in FIG. 2 to FIG. 4, the first valve plate 51 is provided with a first through hole 514 and a sixth through hole 515. The first through hole 514 is aligned and in communication with the second opening portion 17, and the sixth through hole 515 is aligned and in communication with the third opening portion 19. The size and shape of the first through hole 514 and the second opening portion 17 may be substantially the same, and the shape and size of the sixth through hole 515 and the third opening portion 19 may be substantially the same. The first valve plate 51 has a first side surface 516 and a second side surface 517, where the first side surface 516 is in contact with the second valve plate 52, and the second valve plate 52 is rotatably mounted in the valve cavity 14. Under the action by the transmission part 53, the second valve plate 52 can open and close the first through hole 514 of the first valve plate 51 and/or adjust an opening degree of the first through hole 514, and the second valve plate 52 can open and close the sixth through hole 515 and/or adjusting an opening degree of the sixth through hole 515.

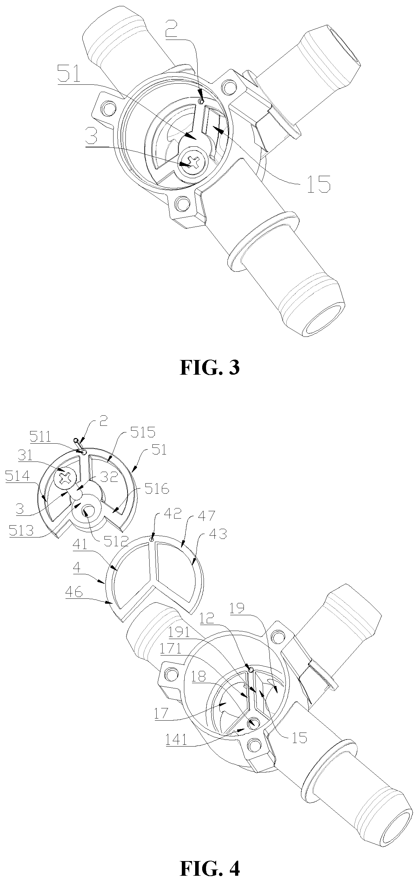

As shown in FIG. 2 to FIG. 4, the first valve plate 51 may be substantially in shape of disc, and the second valve plate 52 may be substantially fan-shaped. The first through hole 514 and the second opening portion 17 may be substantially fan-shaped. Here, the first through hole 514 is configured to be fan-shaped. The fan-shaped second valve plate 52 rotates relative to the first valve plate 51. In a case that the second valve plate 52 covers at least a part of the first through hole 514, an equivalent flow area of the fan-shaped first through hole 514 is substantially increased or decreased in proportion to a rotation angle of the second valve plate 52, which is beneficial to the precise control of a flow rate of the first through hole 514. The sixth through hole 515 and the third opening portion 19 may be substantially fan-shaped. In a case that the second valve plate 52 covers at least a part of the sixth through hole 515, an equivalent flow area of the fan-shaped sixth through hole 515 is substantially increased or decreased in proportion to a rotation angle of the second valve plate 52, which is beneficial to the precise control of a flow rate of the sixth through hole 515. As shown in FIG. 4, the valve body 1 further includes an partition portion 15 located in the valve cavity bottom wall portion 141, and the partition portion 15 is located between the second opening portion 17 and the third opening portion 19. The second opening portion 17 and the third opening portion 19 may be symmetrically distributed on two sides of the partition portion 15.

As shown in FIG. 4, a sealing gasket 4 is further provided between the first valve plate 51 and the valve cavity bottom wall portion 141. The sealing gasket 4 is provided with a third through hole 41 and a seventh through hole 43. The third through hole 41 is provided corresponding to the second opening portion 17 and the first through hole 514, and the seventh through hole 43 is provided corresponding to the third opening portion 19 and the six through hole 515.

As shown in FIG. 3, FIG. 4 and FIG. 6, the first valve plate 51 is provided with a second through hole 512. The control valve further includes a first limiting part 3 penetrating through the second through hole 512. One end of the first limiting part 3 abuts against the first valve plate 51, and the other end of the first limiting part 3 is fixed to the valve body or is in an integral structure with the valve body. The first limiting part 3 includes a head portion 31 and a rod portion 32. An outer diameter of the head portion 31 is larger than that of the rod portion 32. The other end of the rod portion 32 may extend into the valve cavity bottom wall portion 141 and be fixed with the valve body. The first limiting part 3 and the valve cavity bottom wall portion 141 may be fixed by means of screw connection, clamping connection, etc. The rod portion 32 penetrates through the second through hole 512. The first limiting part 3 is configured to limit the position of the first valve plate 51 between the head portion 31 and the valve cavity bottom wall portion 141, so that the first valve plate 51, the sealing gasket 4 and the valve cavity bottom wall portion 141 are relatively fixed. The second through hole 512 further includes a recess portion 513 recessed in the first side surface 516. The head portion 31 is hold in the recess portion 513. The head portion 31 abuts against the recess portion 513, and does not protrude out of the first side surface 516, so that the head portion 31 and the second valve plate 52 may not interfere with each other. In addition, in a case that the head portion 31 is lower than the first side surface 516, the recess portion 513 may reduce the contact area between the first side surface 516 and the second valve plate 52, thereby reducing the friction between the first valve plate 51 and the second valve plate 52. The first limiting part 3 may be eccentrically provided in the first valve plate 51, and the second through hole 512 corresponding to the first limiting part 3 may also be eccentrically provided.

In a case that the control valve is connected to a waterway system, the control valve may be subjected to a fluid pressure acting on the second opening portion 17 and directing toward the valve cavity. Even in a case that the fluid pressure in the waterway system is greater than a pre-tightening force of the elastic element 533, which pushes the second valve plate 52 away from the first valve plate 51 by the fluid pressure, as being limited by the first limiting part 3, the first valve plate 51 may not be washed away from the valve cavity bottom wall portion 141 by the fluid pressure, thereby reducing the risk that the first valve plate 51 and the sealing gasket 4 cannot return to their original positions after being separated from the valve cavity bottom wall portion 141, thereby increasing the reliability of the fluid seal between the first valve plate 51 and the valve body 1.

It should be noted that the "outer diameter" mentioned above does not mean that the outer contours defining the rod portion and the head portion are in shape of circle, and the "inner diameter" does not mean that the inner contour defining the through hole is in shape of circle. The outer contours of the rod portion and the head portion, or the inner contour of the through hole may also be in other shapes, such as elliptical, polygonal, etc. In that case, the "outer diameter" refers to the maximum width of the cross-section of the head portion. For example, in a case that the cross-section of the head portion is an ellipse, the "outer diameter" refers to a length of a major axis of the ellipse. The "inner diameter" refers to the maximum width of the cross section of the through hole. For example, in a case that the cross section of the through hole is an ellipse, the "inner diameter" refers to a length of a major axis of the ellipse.

In other embodiments of the second through hole 512 and the rod portion 32, the shape of the cross section of the outer peripheral surface of the rod portion may not be circular, and the shape of a cross section of an inner wall surface of the second through hole is complementary to the shape of the rod portion to relatively prevent the first valve plate 51 from rotating around the rod portion. That is, the first valve plate 51 has a function of positioning and limiting in a direction parallel to the second opening portion 17, which is beneficial to the installation of the first valve plate 51. The first limiting part 3 and the valve body may be structurally separated. In this embodiment, as shown in FIG. 2, the rod portion 32 may be provided with an external thread. During installation, at least a part of the rod portion 32 is screwed into the second hole 18 provided in the valve cavity bottom wall portion 141, and the installation is relatively simple. The valve body 1 may be made of metal or plastic. In other embodiments of the first limiting part 3, the first limiting part 3 is made of plastic material, the first limiting part 3 and the valve body 1 may be in an integral structure, and the head portion 31 may be formed by melting and solidifying.

As shown in FIG. 4, the sealing gasket 4 includes a first sealing portion 46 surrounding the second opening portion 17. In a case that the second opening portion 17 is fan-shaped, the first sealing portion 46 may also be provided in a fan shape as shown in FIG. 4. The first sealing portion 46 may be in a compressed state, so that the second opening portion 17 is in communication with the first through hole 514 and sealed. The sealing gasket 4 further includes a second sealing portion 47 surrounding the third opening portion 19. In a case that the third opening portion 19 is fan-shaped, the second sealing portion 47 may also be provided in a fan shape as shown in FIG. 4. The second sealing portion 47 may be in a compressed state, so that the third opening portion 19 is in communication with the sixth through hole 515 and sealed. The first sealing portion 46 and the second sealing portion 47 may be partially overlapped. In FIG. 4, the first sealing portion 46 and the second sealing portion 47 of two fan shapes are connected to each other to form a structure larger than a semicircle with a gap. The overlapping part corresponds to the partition portion 15 of the valve cavity bottom wall portion 141. The first limiting part 3 is inserted into the second through hole 512 and penetrates at a notch position of the sealing gasket 4 to enter the second hole 18.

The first limiting part 3 is separated from the second opening portion 17 with a distance, and at least a part of the first sealing portion 46 is provided between the first limiting part 3 and the second opening portion 17, which can prevent or reduce the fluid from flowing into or out of the second through hole 512, and improve the sealing effect. The first limiting part 3 is separated from the third opening portion 19 with a distance, and at least a part of the second sealing portion 47 is provided between the first limiting part 3 and the third opening portion 19, which can prevent or reduce the fluid from flowing into or out of the second through hole 512, and improve the sealing effect.

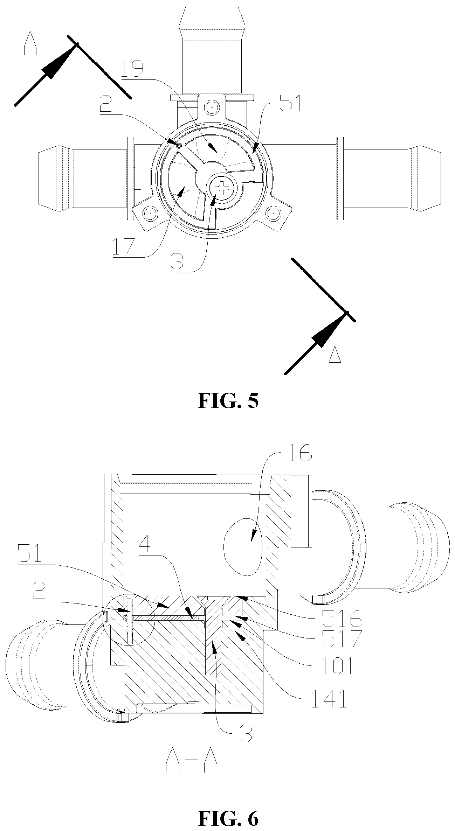

As shown in FIG. 4 and FIG. 6, the valve body 1 includes a bottom wall surface 101 located in the valve cavity bottom wall portion 141. The valve body 1 includes a first rib 171 and a second rib 191 protruding from the bottom wall surface 101, where the first rib 171 surrounds the second opening portion 17, the second rib 191 surrounds the third opening portion 19. The first rib 171 is provided between the first sealing portion 46 and the second opening portion 17, and the second rib 191 is provided between the second sealing portion 47 and the third opening portion 19. The first rib 171 is configured to limit the position of the first sealing portion 46 in the direction parallel to the second opening portion 17, so that the first sealing portion 46 always surrounds an outer peripheral side of the second opening portion 17, which reduces the risk of sealing failure of the second opening portion 17 caused by the sealing gasket 4 being offset from the original position in the direction parallel to the second opening portion 17. The second rib 191 is configured to limit the position of the second sealing portion 47 in a direction parallel to the third opening portion 19.

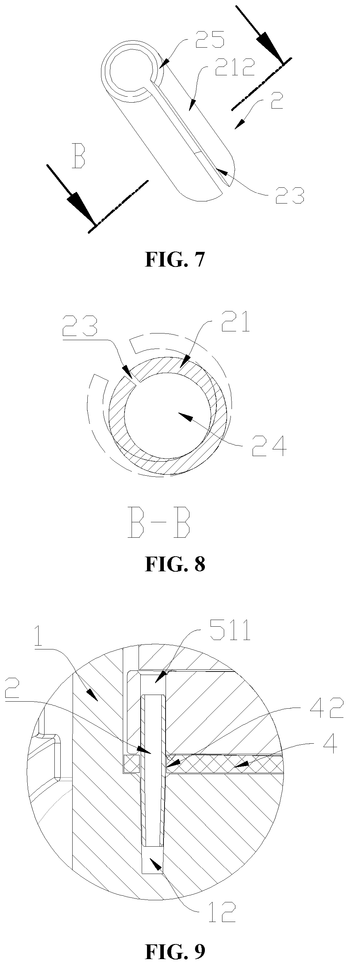

As shown in FIG. 7 and FIG. 8, the control valve includes a second limiting part 2. The second limiting part 2 includes a annular wall portion 21, and further includes a notch portion 23 extending along an axial direction of the second limiting part 2, where the annular wall portion 21 is curled and has elasticity and a cross section of the annular wall portion 21 may be substantially arc-shaped. The second limiting part 2 includes an outer peripheral surface 212 located in an outer periphery of the annular wall portion 21. An inner cavity 24 is provided inside the second limiting part 2, and the inner cavity 24 extends along the axial direction of the second limiting part 2. The dotted line in FIG. 8 refers to a state of the second limiting part 2 before being compressed.

As shown in FIG. 4 and FIG. 9, the sealing gasket 4 may further be provided with a fifth through hole 42 corresponding to the fourth through hole 511 of the first valve plate 51. The fourth through hole 511 is closer to an inner wall corresponding to the valve cavity relative to the second through hole 512. The second limiting part 2 penetrates through the fourth through hole 511 and the fifth through hole 42. The second limiting part 2 is in interference fit with the fourth through hole 511, and the second limiting part 2 may in interference fit with the fifth through hole 42. One end of the second limiting part 2 is located in the fourth through hole 511, and the other end of the second limiting part 2 is fixed to the valve body. The valve body 1 includes a first hole 12 provided in the valve cavity bottom wall portion 141, one end of the second limiting part 2 is inserted into the first hole 12, and the other end of the second limiting part 2 is inserted into the fourth through hole 511. The second limiting part 2 can obtain positioning to the first valve plate 51 in the direction parallel to the second opening portion 17, so that the first through hole 514 of the first valve plate 51 is aligned with the second opening portion 17 of the valve body 1 more accurately. Positioning and circumferential position limiting to the first valve plate 51 and the sealing gasket 4 can be obtained by the second limiting part 2 and the first limiting part 3. In other embodiments of the second limiting part 2, the second limiting part 2 may also be in an integral structure with the valve body 1. It should be noted here that the number of the second limiting part 2 is not limited to one, and may be greater than or equal to two.

As shown in FIG. 5, FIG. 6 and FIG. 9, the first limiting part 3 is offset from a rotation axis of the second valve plate 52. In a case that the first valve plate 51 is subjected to a pressure from the first limiting part 3 toward the valve cavity bottom wall portion 141, the pressure acted on the first valve plate 51 is not uniform, so that the first valve plate 51 has a tendency to separate from the valve cavity bottom wall portion 141 on a side away from the second through hole 512. At this time, the second limiting part 2 may generate a frictional force on the first valve plate 51 toward the valve cavity bottom wall portion 141, so that the side of the first valve plate 51 away from the second through hole 512 cannot be relatively separated from the valve cavity bottom wall portion 141, and the risk of failure of the sealing gasket 4 is relatively reduced. Compared with other fixing manners, the cost of using the second limiting part 2 is lower, and the space occupied by the second limiting part 2 is smaller. During installation, the second limiting part 2 may be directly pressed into the fourth through hole 511 and the first hole 12, and the installation process is relatively simple.

As shown in FIG. 7 and FIG. 9, the second limiting part 2 further includes a tapered guiding portion 25, which is located at two axial ends of the second limiting part 2 to facilitate the second limiting part 2 being inserted into the fourth hole 511 and the first hole 12 with relatively smaller inner diameters. The inner diameter of the first hole 12 is slightly smaller than an outer diameter of the second limiting part 2 before being inserted into the first hole 12. The first hole 12 may be substantially tapered, with a larger inner diameter close to the orifice, and a smaller inner diameter away from the orifice, which may perform the function of guiding as the second limiting part 2 is inserted into the first hole 12.

As shown in FIG. 5, the first hole 12 and the second hole 18 are located at two ends of the partition portion 15, which may reduce the space occupying the second opening portion 17 and the third opening portion 19. A distance between the second limiting part 2 and the first limiting part 3 is relatively large, so that swing amplitudes of the first valve plate 51 about the first limiting part 3 or the second limiting part 2 are relatively small, and then the positioning to the first valve plate 51 is more precise.

As shown in FIG. 4 and FIG. 9, in a case that the valve body 1 is made of plastic, the inner wall surface of the second through hole 512 is in clearance fit with the rod portion 32 of the first limiting part 3. A certain margin may be left between the first limiting part 3 and the first valve plate 51, so that a part of the first limiting part 3 may also be screwed into the second hole 18 in a case that the center of the second through hole 512 is slightly offset from the center of the second hole 18.

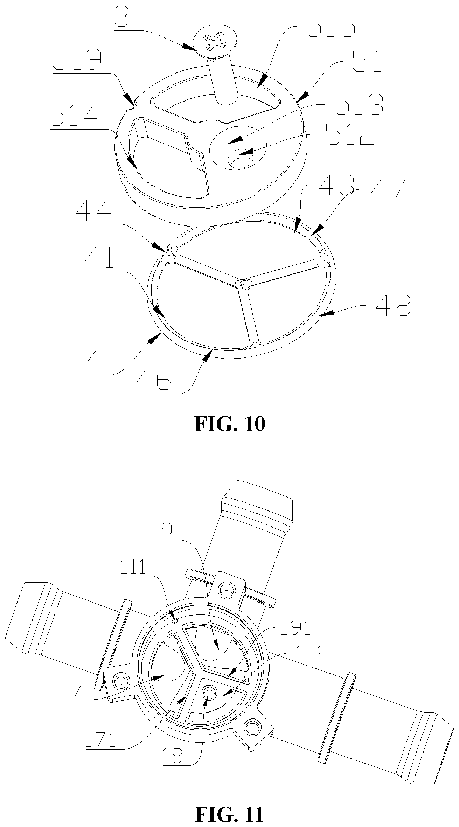

As shown in FIG. 10 to FIG. 12, in another embodiment of the control valve, which is different from the above embodiments, the first valve plate 51 includes a second recess portion 519 located in an edge of the first valve plate 51. The valve body includes a protrusion portion 111 protruding from an inner wall surface of the valve cavity 14, and at least a part of the protrusion portion 111 extends into the second recess portion 519. A part of an outer peripheral surface of the protrusion portion 111 may be in a clearance fit with an inner wall surface of the second recess portion 519 to realize the positioning to the first valve plate 51, so that the first through hole 514 and the second opening portion 17 are aligned more precisely, which facilitates the installation. Meanwhile the circumferential rotation of the first valve plate 51 and the sealing gasket 4 can also be limited. The protrusion portion 111 and a boss 102 may be located at the two ends of the partition portion 15, so that a distance between the protrusion portion 111 and the first limiting part 3 is relatively large, and swing amplitudes of the first valve plate 51 about the first limiting part 3 or the protrusion portion 111 are relatively small, and then the positioning to the first valve plate 51 is more precise. A height of the protrusion portion 111 protruding from the bottom wall surface 101 is greater than heights of the first rib 171 and the second rib 191. At least a part of the sealing gasket 4 is configured to surround the first rib 171.

As shown in FIG. 10 to FIG. 12, the valve body also includes a boss 102 protruding from the bottom wall surface 101. A protruding height of the boss 102 is the same with or substantially the same with a protruding height of the first rib 171, a protruding height of the second rib 191 is the same with or substantially the same with a protruding height of the first rib 171. An orifice of the second hole 18 is located in the boss 102, and the second side surface of the first valve plate 51 may abut against the boss 102, the first rib 171, and the second rib 191. In this case, since contact surfaces are relatively flat and the distribution of the contact surfaces is relatively uniform, the force acted on the first valve plate 51 is relatively uniform, so that a risk that the first valve plate 51 is separated from the valve cavity bottom wall portion 141 on a side away from the second through hole 512 is relatively small. The sealing gasket 4 may be provided with a notch portion 44 located at an edge of the sealing gasket 4, and the notch portion 44 extends from the edge of the sealing gasket 4 to the center of the sealing gasket 4. The notch portion 44 is aligned with the second recess portion 519, and a part of the protrusion portion 111 extends into the notch portion 44 to prevent the sealing gasket 4 from rotating.

As shown in FIG. 10 to FIG. 12, a part of the first sealing portion 46 is provided between the first rib 171 and the boss 102. Apart of the second sealing portion 47 is provided between the second rib 191 and the boss 102. The sealing gasket 4 further includes a third sealing portion 48, which is relatively far away from the second opening portion 17 and the third opening portion 19. The thickness of the sealing gasket 4 in an uncompressed state is greater than heights of the boss 102, the first rib 171, and the second rid 191, the first valve plate 51 can be subjected to elastic forces from the first sealing portion 46 and the second sealing portion 47 at the positions near the third opening portion 19 and the second opening portion 17, and the first valve plate 51 may be subjected to an elastic force from the third sealing portion 48 at a position far away from third opening portion 19 and the second opening portion 17, so that the force balance to the first valve plate 51 is obtained.

It should be noted that the above embodiments are only used to illustrate the present application rather than limit the technical solutions described in the present application, for example, the definition of directionality such as "front", "rear", "left", "right", "up" and "down". Although the present application has been described in detail herein with reference to the above embodiments, those of ordinary skill in the art should understand that the present application may still be combined, modified or equivalently replaced by those skilled in the art, and all technical solutions and its improvements that do not depart from the spirit and scope of the present application should be covered by the scope of the claims of the present application.

## Claims

1. A control valve, comprising a valve body (1) and a valve core assembly (5), wherein the valve body comprises a valve cavity (14), and at least a part of the valve core assembly (5) is accommodated in the valve cavity (14); the valve body further comprises a first opening portion (16) and a second opening portion (17); the valve body comprises a valve cavity bottom wall portion (141), and the second opening portion (17) is located in the valve cavity bottom wall portion (141),
the valve core assembly comprises a first valve plate (51) and a second valve plate (52); the first valve plate (51) is closer to the valve cavity bottom wall portion (141) relative to the second valve plate (52), and a sealing gasket (4) is provided between the first valve plate (51) and the valve cavity bottom wall portion (141); wherein the first valve plate (51) is provided with a first through hole (514) and a second through hole (512), and the sealing gasket (4) is provided with a third through hole (41) corresponding to the second opening portion (17); the first through hole (514) corresponds to the third through hole (41)
wherein the control valve further comprises a first limiting part (3) penetrating through the second through hole (512), one end of the first limiting part (3) abuts against the first valve plate (51), and the other end of the first limiting part (3) is fixed to the valve body or is in an integral structure with the valve body.

2. The control valve according to claim 1, wherein the first valve plate (51) comprises a first side surface (516), at least a part of the first side surface is in contact with the second valve plate (52);
the first valve plate (51) comprises a recess portion (513) that is recessed in the first side surface (516) and connected to one end of the second through hole (512); the first limiting part comprises a head portion (31) that is hold in the recess portion (513) and abuts against the recess portion (513); the head portion (31) does not protrude out of the first side surface (516).

3. The control valve according to claim 2, wherein the control valve further comprises a second limiting part (2); the first valve plate (51) is further provided with a fourth through hole (511), the sealing gasket is provided with a fifth through hole (42) corresponding to the fourth through hole (511); the fourth through hole (511) is closer to an inner wall corresponding to the valve cavity relative to the second through hole (512);
the second limiting part (2) penetrates through the fourth through hole (511) and the fifth through hole (42), and is in interference fit with the fourth through hole (511); one end of the second limiting part (2) is located in the fourth through hole (511), and the other end of the second limiting part (2) is fixed to the valve body or is in an integral structure with the valve body.

4. The control valve according to claim 3, wherein the second limiting part (2) comprises an annular wall portion (21) and an outer peripheral surface (212) located in an outer periphery of the annular wall portion (21);
a part of the outer peripheral surface (212) is in interference fit with an inner wall surface of the fourth through hole (511); the valve body includes a first hole (12) located at the valve cavity bottom wall portion (141); another part of the outer peripheral surface (212) is in interference fit with an inner wall surface of the first hole (12).

5. The control valve according to any one of claims 1 to 4, wherein the valve body (1) comprises a bottom wall surface (101) located in the valve cavity bottom wall portion (141); the valve body comprises a first rib (171) protruding from the bottom wall surface (101) that surrounds the second opening portion (17);
at least a part of the sealing gasket (4) surrounds the first rib (171), and the sealing gasket (4) is accommodated in a space between the first valve plate (51) and the bottom wall surface (101).

6. The control valve according to claim 5, wherein the valve body further comprises a boss (102) protruding from the bottom wall surface (101), and a protruding height of the boss (102) and a protruding height of the first rib (171) are the same or substantially the same; the valve cavity bottom wall portion (141) is provided with a second hole (18), and a part of a third limiting part (3) is screwed into the second hole (18), and an orifice of the second hole (18) is located in the boss (102).

7. The control valve according to claim 5 or 6, wherein the first valve plate (51) is provided with a first side surface (516) and a second side surface (517), and at least a part of the first side surface (516) is in contact with the second valve plate (52);
the second side surface (517) of the first valve plate (51) is flat or substantially flat.

8. The control valve according to claim 7, wherein the first valve plate (51) further comprises a second recess portion (519) located at an edge of the first valve plate (51); the valve body further comprises a protrusion portion (111) protruding from an inner side wall of the valve cavity (14), at least a part of the protrusion portion (111) extends into the second recess portion (519); a height of the protrusion portion (111) protruding from the bottom wall surface does not extend beyond the first side surface (516) of the first valve plate (51); a part of an outer peripheral surface of the protrusion portion (111) is in clearance fit with an inner wall surface of the second recess portion (519).

9. The control valve according to claim 8, wherein
the valve body comprises a third opening portion (19) located in the valve cavity bottom wall portion (141), and the valve body further comprises an partition portion (15) located in the valve cavity bottom wall portion (141), and the partition portion (15) is located between the second opening portion (17) and the third opening portion (19);
the first valve plate further comprises a sixth through hole (515) provided corresponding to the third opening portion (19); the boss (102) and the protrusion portion (111) are respectively located at two ends of the partition portion (15).

10. The control valve according to claim 9, wherein
the sealing gasket (4) is provided with the fifth through hole (42), the fifth through hole (42) is aligned with the first hole (12), and the second limiting part (2) penetrates through the fifth through hole (42);
the sealing gasket (4) comprises a first sealing portion (46) surrounding the second opening portion (17); the sealing gasket (4) further comprises a second sealing portion (47) surrounding the third opening portion (19).

11. The control valve according to claim 10, wherein
the first limiting part (3) is separated from the second opening portion (17) with a distance, and at least a part of the first sealing portion (46) is provided between the first limiting part (3) and the second opening portion (17); the first limiting part (3) is separated from the third opening portion (19) with a distance, and at least a part of the second sealing portion (47) is provided between the first limiting part (3) and the third opening portion (19).

12. The control valve according to claim 11, wherein the valve body (1) comprises a second rib (191) protruding from the bottom wall surface (101), and the second rib (191) is provided between the second sealing portion (47) and the third opening portion (19);
the sealing gasket (4) is accommodated in the space between the first valve plate (51) and the bottom wall surface (101).

13. The control valve according to claim 12, wherein a part of the first sealing portion (46) is provided between the first rib (171) and the boss (102), and at least a part of the second sealing portion (47) is provided between the second rib (191) and the boss (102).
